## Europäisches Patentamt
## European Patent Office
## Office européen des brevets

(11) Veröffentlichungsnummer: **0 195 891**
**B1**

(12) **EUROPÄISCHE PATENTSCHRIFT**

(45) Veröffentlichungstag der Patentschrift: **25.07.90**

(51) Int. Cl.⁵: **B 23 B 5/32**

(21) Anmeldenummer: **86100807.6**

(22) Anmeldetag: **22.01.86**

(54) Unterflur-Radsatzdrehmaschine.

(30) Priorität: **27.03.85 DE 8509180 u**

(43) Veröffentlichungstag der Anmeldung:
**01.10.86 Patentblatt 86/40**

(45) Bekanntmachung des Hinweises auf die
Patenterteilung:
**25.07.90 Patentblatt 90/30**

(84) Benannte Vertragsstaaten:
**AT BE CH DE FR GB IT LI LU NL SE**

(56) Entgegenhaltungen:
**DE-A-2 021 820**
**DE-U-8 433 487**
**FR-A-1 278 741**
**FR-A-2 350 921**

**"Railway Engineer International", März/April
1980 Seiten 38 -40**

(73) Patentinhaber: **Hoesch Maschinenfabrik
Deutschland Aktiengesellschaft
Borsigstrasse 22
D-4600 Dortmund 1 (DE)**

(72) Erfinder: **Brinkmann, Dirk, Dipl.-Ing.
In der Heide 9
D-4670 Lünen-Niederaden (DE)**
Erfinder: **Gutöhrlein, Uwe, Dipl.-Ing.
Wetteweg 9
D-4600 Dortmund 30 (DE)**

Courier Press, Leamington Spa, England.

## Beschreibung

Die Erfindung bezieht sich auf eine Unterflur-Radsatzdrehmaschine zum Reprofilieren der Radreifenumrisse von Eisenbahn-Radsätzen, mit zwei angetriebenen Reibrollenpaaren, die je an einem Radreifenumriß eines Radsatzes andrückbar sind, wobei die Reibrollen eines jeden Reibrollenpaares einzeln mit je einem Schwenkantrieb verbunden und um je eine parallel zur Radsatzachse angeordnete Schwenkachse schwenkbar sind, und wobei den Schwenkantrieben eines jeden Reibrollenpaares eine Gleichlaufvorrichtung zugeordnet ist.

Eine Unterflur-Radsatzdrehmaschine der vorgenannten Art ist bekannt durch die GB-Zeitschrift "Railway Engineer International", März/April 1980, Seiten 38 bis 40.

Bei einer solchen Unterflur-Radsatzdrehmaschine sind jeweils zwei einem Reibrollenpaar zugeordnete Schwenkantriebe mit je einem Hydraulikzylinder und einer kuppelbaren Gleichlaufvorrichtung ausgeführt.

Die Hydraulikzylinder der Schwenkantriebe sind aufgrund ihrer Verschiebecharakteristik nicht in der Lage, ein gleichmäßiges Andrücken der Reibrollen an unrunde Räder eines Radsatzes während der Reprofilierung zu bewirken. Unrunde Räder eines Radsatzes führen nämlich zwangsläufig zu einer Verschwenkung der Reibrollen eines jeden Reibrollenpaares, wobei das Verschwenken der Reibrollen durch die Räder des Radsatzes größere Andrückkräfte an den Radreifenumrissen auslöst als das Verschwenken der Reibrollen durch die Hydraulikzylinder. Hierdurch ist insbesondere eine optimale Leistungsübertragung der Reibrollen auf die Radreifenumrisse des Radsatzes nicht gegeben.

Eine Gleichlaufvorrichtung nach dem vorerwähnten Stand der Technik enthält zwei ineinandergreifende Zahnradsegmente und ein Kupplungssystem. Dieses Kupplungssystem erlaubt ein Kuppeln der einem Reibrollenpaar zugeordneten Schwenkantriebe, damit die Reibrollen eines jeden Reibrollenpaares nicht nur einzeln, sondern auch synchron geschwenkt werden können. Mit dieser kuppelbaren Gleichlaufvorrichtung muß jedoch in Kauf genommen werden, daß durch Schlupf und Formänderung des Kupplungssystems die Schwenkbewegung der Reibrollen eines jeden Reibrollenpaares nicht exakt symmetrisch zur Maschinenmitte möglich ist. Die Folge ist ein Versatz der Radsatzachse gegenüber der Maschinenmitte, wodurch die Bearbeitungsgenauigkeit des Radsatzes herabgesetzt wird.

Der Erfindung liegt die Aufgabe zugrunde, eine Unterflur-Radsatzdrehmaschine der eingangs genannten Art so auszubilden, daß deren Schwenkantriebe zum gleichmäßigen Andrücken der Reibrollen an die Radreifenumrisse des Radsatzes und deren Gleichlaufvorrichtungen zum automatischen Ausrichten der Radsatzachse auf die Maschinenmitte gut geeignet sind.

Erfindungsgemäß wird diese Aufgabe dadurch gelöst, daß zur Erzeugung der Schwenkbewegung der Reibrollen eines jeden Reibrollenpaares die Schwenkantriebe mit je einem Pneumatik-Balgzylinder und die Gleichlaufvorrichtung mit einer Verschiebeeinheit versehen sind.

Vorteilhafte Ausgestaltungen der Neuerung sind in den Unteransprüchen erfaßt.

Im folgenden wird die Erfindung anhand einer Zeichnung, in der ein Ausführungsbeispiel schematisch dargestellt ist, näher beschrieben.

Es zeigt

Fig. 1 eine Unterflur-Radsatzdrehmaschine und einen von ihr aufgenommenen Radsatz in Ansicht mit einer Teilansicht eines auf dem Radsatz aufliegenden Fahrzeugaufbaus, mit einem Schnitt durch zwei Einlaufschienen und zwei Schienenträger und mit einem Teilschnitt durch ein Fundament,

Fig. 2 die rechte Maschineneinheit der Unterflur-Radsatzdrehmaschine im Grundriß mit strichpunktierter Darstellung des rechten Radreifenumrisses des aufgenommenen Radsatzes in vergrößertem Maßstab,

Fig. 3 einen Schnitt entsprechend der Linie III—III in Fig. 1 in vergrößertem Maßstab,

Fig. 4 eine Seitenansicht der Unterflur-Radsetzdrehmaschine und des von ihr aufgenommenen Radsatzes in Richtung des Pfeiles A in Fig. 1 mit einem Teilschnitt durch das Fundament in vergrößertem Maßstab,

Fig. 5 einen Schnitt durch die rechte Maschineneinheit der Unterflur-Radsetzdrehmaschine entsprechend der Linie V—V in Fig. 4,

Fig. 6 einen Teilausschnitt B der Fig. 4 in vergrößertem Maßstab,

Fig. 7 einen Teilschnitt entsprechend der Linie VII—VII in Fig. 6,

Fig. 8 einen Teilschnitt entsprechend der Linie VIII—VIII in Fig. 6.

Eine Unterflur-Radsatzdrehmaschine 1, die fest mit einem Fundament 2 verbunden ist, wird eingesetzt zum Reprofilieren der Radreifenumrisse 3, 4 eines in einem Schienenfahrzeug 5 eingebauten Radsatzes 6.

Die Unterflur-Radsatzdrehmaschine 1 hat zwei symmetrisch zur Mitte 7 eines Fahrgleises 8 angeordnete Maschineneinheiten 9, 10, von denen jede ein Reibrollenpaar 11, 12 mit zwei Schwenkantrieben 13, 14, 15, 16 und einem Drehantrieb 17, 18, eine Niederhaltevorrichtung 19, 20 sowie eine Stützvorrichtung 21, 22 für einen Achslagerkasten 23, 24 des Radsatzes 6 aufweist.

Zu dem Fahrgleis 8 gehören je zwei Einlaufschienen 25, 26 und Auslaufschienen 27, 28 sowie zwei Überbrückungsschienen 29, 30 zum Überbrücken des Bereichs zwischen den Einlaufschienen 25, 26 und Auslaufschienen 27, 28.

Die Überbrückungsschienen 29, 30 sind in Fahrgleisrichtung 31 verschiebbar angeordnet, damit sie aus dem Arbeitsbereich der beiden Drehsupporte 32, 33 entfernt werden können.

Die Reibrollenpaare 11, 12 bestehen aus je zwei Reibrollen 34, 35, 36, 37 von denen jede auf einer parallel zur Radsatzachse 38 angeordneten Welle 39, 40, 41, 42 sitzt.

Jede Welle 39, 40, 41, 42 ist zweifach in einer Schwinge 43, 44, 45, 46 mit einer parallel zur Radsatzachse 38 verlaufenden Schwenkachse 47, 48, 49, 50 gelagert.

Die Schwingen 43, 44, 45, 46 sind jeweils an einen Schwenkantrieb 13, 14, 15, 16 gelenkig angeschlossen.

Die Reibrollen 34, 35, 36, 37 eines jeden Reibrollenpaares 11, 12 sind mit einem Drehantrieb 17, 18 verbunden, der einen Motor 51, 52, ein aus zwei Riementrieben 53, 54, 55, 56 bestehendes Verteilergetriebe 57, 58 und zwei Stirnradgetriebe 59, 60, 61, 62 aufweist.

Alle Stirnradgetriebe 59, 60, 61, 62 sind völlig gleich ausgeführt.

Jedes Stirnradgetriebe 59, 60, 61, 62 ist ein Aufsteckgetriebe, dessen hohle Abtriebswelle 63, 64, 65, 66 auf eine Welle 39, 40, 41, 42 gesteckt ist.

Das Gehäuse 67, 68, 69, 70 eines jeden Stirnradgetriebes 59, 60, 61, 62 ist durch Schrauben (nicht dargestellt) fest mit einer Schwinge 43, 44, 45, 46 verbunden.

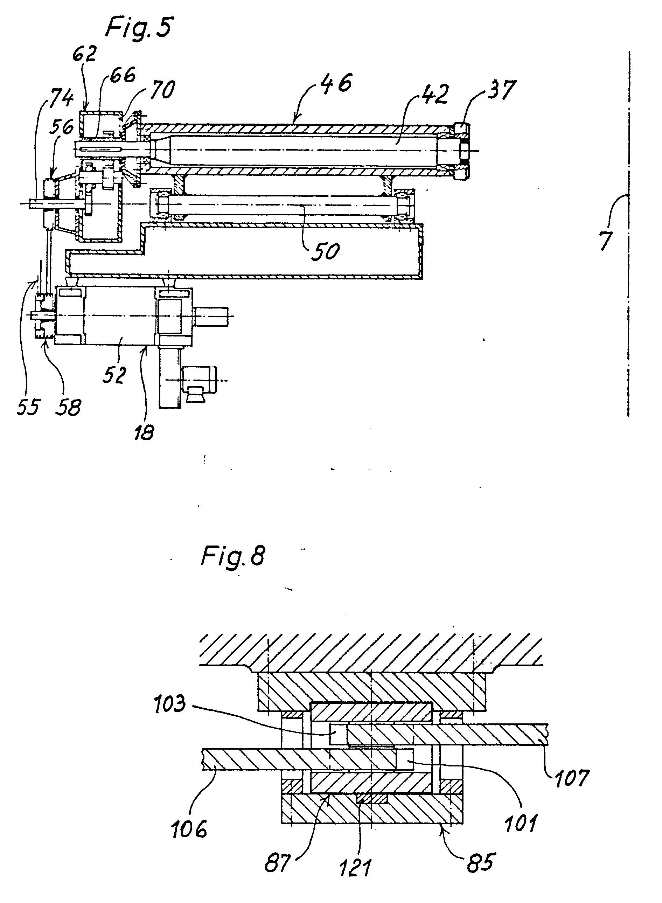

Die Eingangswelle 71, 72, 73, 74 eines jeden Stirnradgetriebes 59, 60, 61, 62 ist achsgleich zu einer Schwenkachse 47, 48, 49, 50 angeordnet, damit während der Schwenkbewegung der Reibrollen 34, 35, 36, 37 die Achsabstände der Riementriebe 53, 54, 55, 56 unverändert bleiben (Fig. 5).

Die Schwenkachsen 47, 48, 49, 50 sind symmetrisch zur Maschinenmitte 75 angeordnet.

Jeder Schwenkantrieb 13, 14, 15, 16 besitzt zur Erzeugung der Schwenkbewegung einen Pneumatik-Balgzylinder 76, 77, 78, 79.

Jeweils zwei einem Reibrollenpaar 11, 12 zugeordnete Schwenkantriebe 13, 14, 15, 16 sind an eine Gleichlaufvorrichtung 80, 81 gekuppelt.

Jede Gleichlaufvorrichtung 80, 81 setzt sich aus einer Verschiebeeinheit 82, 83 und einem Hebelgetriebe 84, 85 zusammen.

Zu einem Hebelgetriebe 84, 85 gehören ein von einer Verschiebeeinheit 82, 83 angetriebener Schlitten 86, 87 und zwei einarmige, an je einer Schwenkwelle 88, 89, 90, 91 befestigte Hebelpaare 92, 93, 94, 95.

Jeder Schlitten 86, 87 der beiden Hebelgetriebe 84, 85 ist mit vier Druckrollen 96, 97, 98, 99, 100, 101, 102, 103 ausgebildet, von denen je zwei einem Hebel 104, 105, 106, 107 eines Hebelpaares 92, 93, 94, 95 zugeordnet sind.

Der andere Hebel 108, 109, 110, 111 eines jeden Hebelpaares 92, 93, 94, 95 ist über je einen Bolzen 112, 113, 114, 115 gelenkig an einen Schwenkantrieb 13, 14, 15, 16 angeschlossen.

Jedes Hebelgetriebe 84, 85 enthält eine Abschaltvorrichtung 116, 117 mit einer an einer Schraubenfeder 118, 119 aufgehängten Schaltstange 120, 121, einer an einem Schlitten 86, 87 befestigten Schaltstangenkupplung 122, 123 und einem Kontaktschalter 124, 125.

Beim Einbringen des Radsatzes 6 in die Unterflur-Radsatzdrehmaschine 1 wurde er zunächst über die Einlaufschienen 25, 26 und die Überbrückungsschienen 29, 30 in Fahrgleisrichtung 31 über die Reibrollen 34, 35, 36, 37 gerollt. Danach wurden die Reibrollen 34, 35, 36, 37 durch Druckluftbeaufschlagung der Pneumatik-Balgzylinder 76, 77, 78, 79 gleichmäßig an die Radreifenumrisse 3, 4 angedrückt.

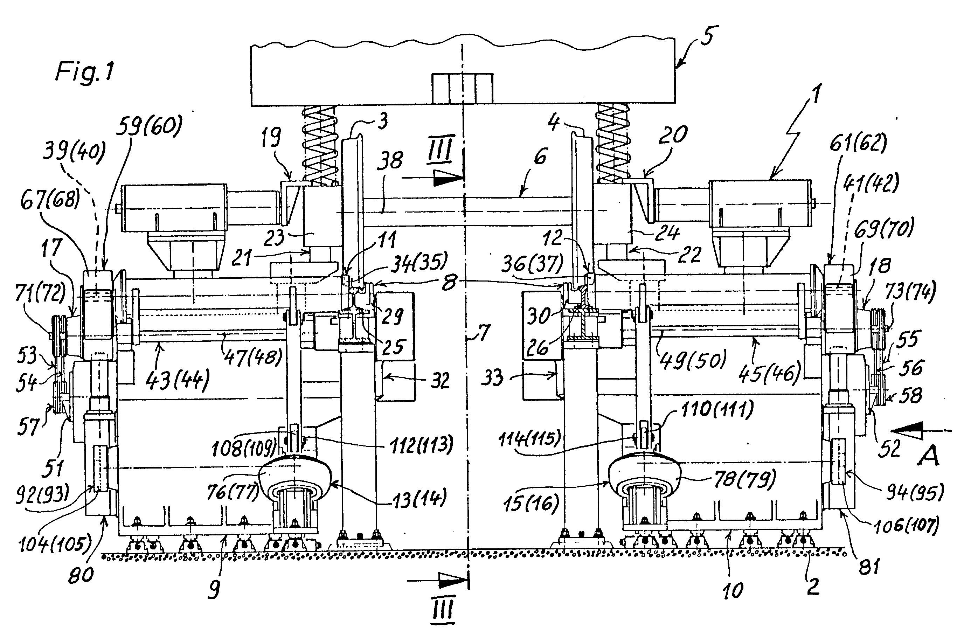

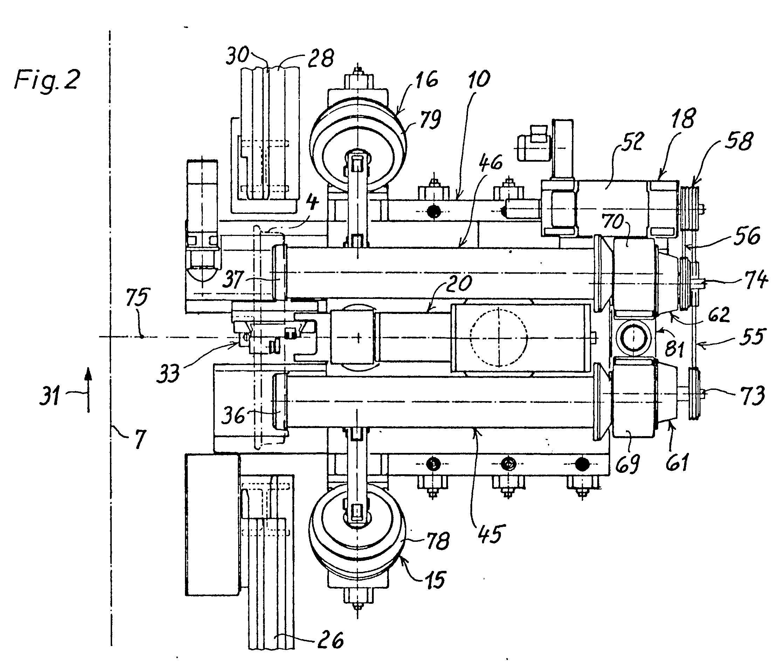

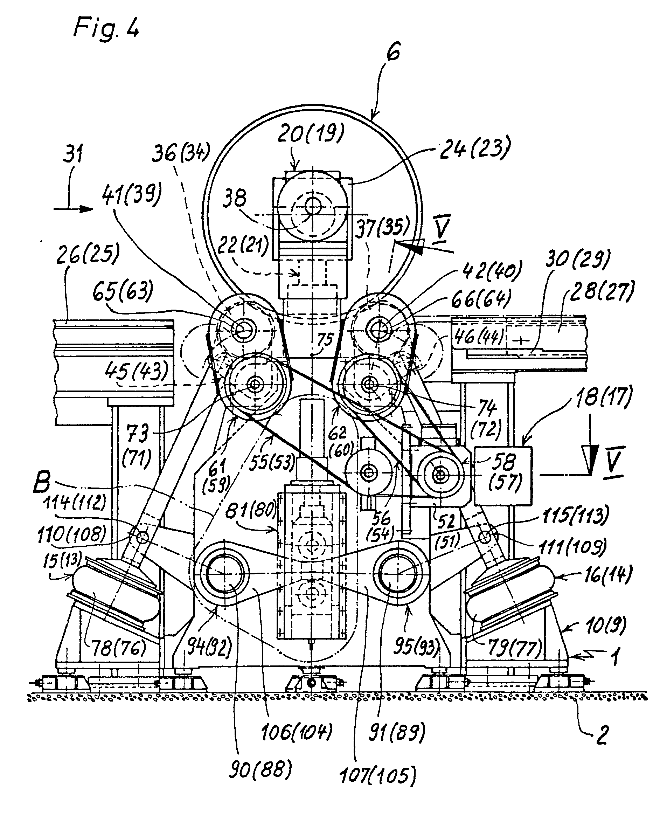

Anschließend wurden die Verschiebeeinheiten 82, 83 betätigt, die über die Hebelgetriebe 84, 85 ein Ausrichten der Radsatzachse 38 auf die Maschinenmitte 75 und ein Hochheben das Radsatzes 6 in die in den Fig. 1, 2 und 4 dargestellte Position bewirkten.

Das Abschalten der Verschiebeeinheiten 82, 83 erfolgte durch die Abschaltvorrichtungen 116, 117, deren Schaltstangen 120, 121 während des Hochhebens des Radsatzes 6 mit den Schlitten 86, 87 nach unten zu den Kontaktschaltern 124, 125 bewegt wurden.

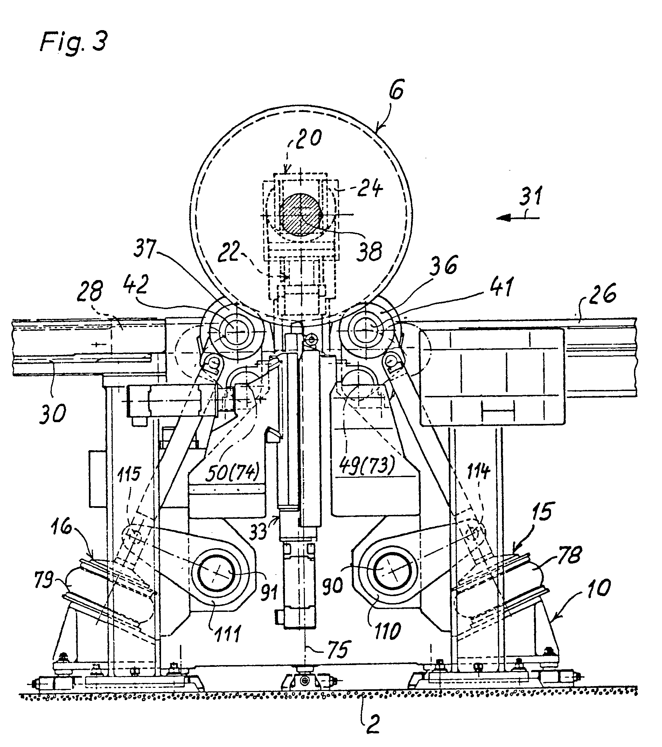

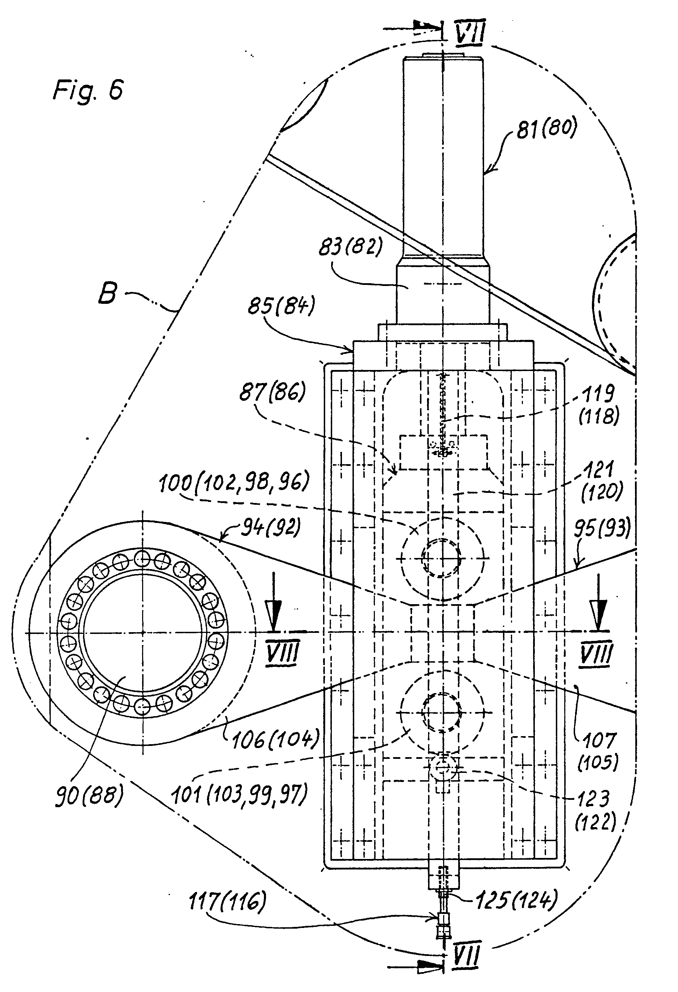

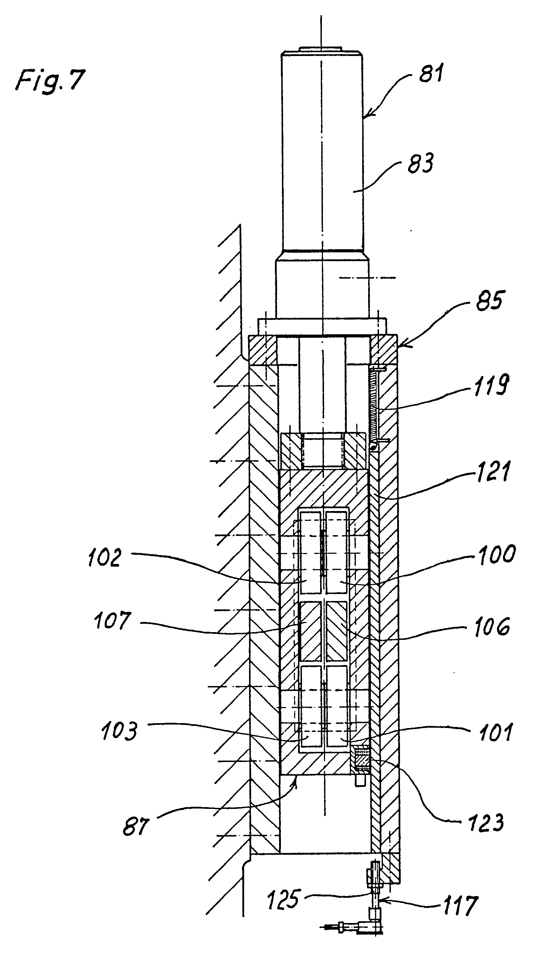

In der angehobenen Stellung des Radsatzes 6 wurden nacheinander die Überbrückungsschienen 29, 30 in Fahrgleisrichtung 31 aus dem Arbeitsbereich der Drehsupporte 32, 33 bewegt, die beiden Achslagerkästen 23, 24 des Radsatzes 6 durch die Niederhaltevorrichtung 19, 20 und die Stützvorrichtungen 21, 22 arretiert, die Verschiebeeinheiten 82, 83 entlastet und die Schaltstangenkupplungen 122, 123 gelöst (Fig. 1, 3, 4, 6 und 7).

In der in den Fig. 1, 3 und 4 dargestellten Position des Radsatzes 6 erfolgt die Reprofilierung der Radreifenumrisse 3, 4 durch die Drehsupporte 32, 33. Hierbei erteilen die Drehantriebe 17, 18 den Reibrollen 34, 35, 36, 37 und dem Radsatz 6 eine Drehbewegung.

Nach der Reprofilierung der Radreifenumrisse 3, 4 werden nacheinander die Drehsupporte 32, 33 aus dem Arbeitsbereich zurückgefahren, die Überbrückungsschienen 29, 30 in den Bereich zwischen die Einlaufschienen 25, 26 und die Auslaufschienen 27, 28 bewegt und der Radsatz 6 durch Verschwenken der Reibrollen 34, 35, 36, 37 auf die Überbrückungsschienen 29, 30 abgesenkt.

Anschließend wird der Radsatz 6 über die Überbrückungsschienen 29, 30 und die Auslaufschienen 27, 28 aus der Unterflur-Radsatzdrehmaschine 1 gerollt. Hiernach steht die Unterflur-Radsatzdrehmaschine 1 zur Reprofilierung der Radreifenumrisse eines anderen Radsatzes zur Verfügung.

Zifferliste

| | |
|---|---|
| 1 | Unterflur-Radsatzdrehmaschine |
| 2 | Fundament |
| 3, 4 | Radreifenumriß |
| 5 | Schienenfahrzeug |
| 6 | Radsatz |
| 7 | Mitte |
| 8 | Fahrgleis |
| 9, 10 | Maschineneinheit |
| 11, 12 | Reibrollenpaar |
| 13, 14, 15, 16 | Schwenkantrieb |
| 17, 18 | Drehantrieb |
| 19, 20 | Niederhaltevorrichtung |

| | |
|---|---|
| 21, 22 | Stützvorrichtung |
| 23, 24 | Achslagerkasten |
| 25, 26 | Einalaufschiene |
| 27, 28 | Auslaufschiene |
| 29, 30 | Überbrückungsschiene |
| 31 | Fahrgleisrichtung |
| 32, 33 | Drehsupport |
| 34, 35, 36, 37 | Reibrolle |
| 38 | Radsatzachse |
| 39, 40, 41, 42 | Welle |
| 43, 44, 45, 46 | Schwinge |
| 47, 48, 49, 50 | Schwenkachse |
| 51, 52 | Motor |
| 53, 54, 55, 56 | Riementrieb |
| 57, 58 | Verteilergetriebe |
| 59, 60, 61, 62 | Stirnradgetriebe |
| 63, 64, 65, 66 | Abtriebswelle |
| 67, 68, 69, 70 | Gehäuse |
| 71, 72, 73, 74 | Eingangswelle |
| 75 | Maschinenmitte |
| 76, 77, 78, 79 | Pneumatik-Balgzylinder |
| 80, 81 | Gleichlaufvorrichtung |
| 82, 83 | Verschiebeeinheit |
| 84, 85 | Hebelgetriebe |
| 86, 87 | Schlitten |
| 88, 89, 90, 91 | Schwenkwelle |
| 92, 93, 94, 95 | Hebelpaar |
| 96, 97, 98, 99, 100, 101, 102, 103 | Druckrolle |
| 104, 105, 106, 107 | Hebel |
| 108, 109, 110, 111 | Hebel |
| 112, 113, 114, 115 | Bolzen |
| 116, 117 | Abschaltvorrichtung |
| 118, 119 | Schraubenfeder |
| 120, 121 | Schaltstange |
| 122, 123 | Schaltstangenkupplung |
| 124, 125 | Kontaktschalter |

**Patentansprüche**

1. Unterflur-Radsatzdrehmaschine zum Reprofilieren der Radreifenumrisse (3, 4) von Eisenbahn-Radsätzen (6), mit zwei angetriebenen Reibrollenpaaren (11, 12), die je an einen Radreifenumriß (3, 4) eines Radsatzes andrückbar sind, wobei die Reibrollen eines jeden Reibrollenpaares einzeln mit je einem Schwenkantrieb (15, 16) verbunden und um je eine parallel zur Radsatzachse angeordnete Schwenkachse (49, 50) schwenkbar sind, und wobei den Schwenkantrieben eines jeden Reibrollenpaares eine Gleichlaufvorrichtung (80, 81) zugeordnet ist, dadurch gekennzeichnet, daß zur Erzeugung der Schwenkbewegung der Reibrollen (34, 35, 36, 37) eines jeden Reibrollenpaares (11, 12) die Schwenkantriebe (13, 14, 15, 16) mit je einem Pneumatik-Balgzylinder (76, 77, 78, 79) und die Gleichlaufvorrichtung (80, 81) mit einer Verschiebeeinheit (82, 83) versehen sind.

2. Unterflur-Radsatzdrehmaschine nach Anspruch 1, dadurch gekennzeichnet, daß jede Gleichlaufvorrichtung (80, 81) ein Hebelgetriebe (84, 85) aufweist.

3. Unterflur-Radsatzdrehmaschine nach den Ansprüchen 1 und 2, dadurch gekennzeichnet, daß jedes Hebelgetriebe (84, 85) mit einer Abschaltvorrichtung (116, 117) ausgebildet ist.

**Revendications**

1. Tour à roues en fosse pour le reprofiliage des contours (3, 4) de bandages d'essieux ferroviaires (6), avec deux paires de rouleaux de friction (11, 12) entraînés, qui peuvent être pressées chacune sur un contour (3, 4) de bandage d'un essieu, les rouleaux de friction de chaque paire de rouleaux de friction étant individuellement reliés à une commande de pivotement (15, 16), et pouvant pivoter autour d'un axe de pivotement (49, 50), et la commande de pivotement de chaque paire de rouleaux de friction est associée à un dispositif de synchronisation (80, 81) disposé parallèlement à l'axe de l'essieu, caractérisé en ce que les commandes de pivotement (13, 14, 15, 16) présentent un cylindre à soufflet pneumatique (76, 77, 78, 79) pour créer le mouvement de pivotement des rouleaux de friction (34, 35, 36, 37) de chaque paire de rouleaux de friction (11, 12), et le dispositif de synchronisation (80, 81) est pourvu d'une unité de déplacement (82, 83).

2. Tour à roues en fosse selon la revendication 1 caractérisé en ce que chaque dispositif de synchronisation (80, 81) est équipé d'un mécanisme à leviers (84, 85).

3. Tour à roues en fosse selon les revendications 1 et 2, caractérisé en ce que chaque mécanisme à leviers (84, 85) est équipé d'un dispositif de déclenchement (116, 117).

**Claims**

1. Underfloor wheel lathe for reprofiling the wheel hub contours (3, 4) of railway wheel sets (6) with two driven roller pairs (11, 12) which can each be pressed against a wheel hub contour (3, 4) of a wheel set, where the friction rollers of each friction roller pair are each individually connected to a swivel drive (15, 16), and can each be swivelled around a swivel axis (49, 50) arranged parallel to the wheel set axis and where the swivel drives of each of the friction roller pairs are each assigned a synchronisation mechanism (80, 81), characterised in that each one of the roller pairs (11, 12) is provided with the swivel drive (13, 14, 15, 16) each with a pneumatic bellows cylinder (76, 77, 78, 79) and the synchronising mechanism (80, 81) with a switching unit (82, 83) to porduce the swivelling movement of the friction rollers (34, 35, 36, 37).

2. Underfloor wheel lathe as in claim 1, characterised in that each synchronisation mechanism (80, 81) is equipped with a lever gear (84, 85).

3. Underfloor wheel lathe as in claims 1 and 2, characterised in that the lever gear (84, 85) is designed with a disconnection mechanism (116, 117).

Fig.1

Fig.2

EP 0 195 891 B1

Fig. 3

*Fig. 4*

*Fig. 5*

*Fig. 8*

Fig. 6

Fig.7